# EUROPEAN PATENT SPECIFICATION

(11) **EP 4 322 290 B1**
(45) Date of publication and mention of the grant of the patent: **16.04.2025**
(21) Application number: 22189980.0
(22) Date of filing: 11.08.2022
(51) Int. Cl.: H01M 50/103, H01M 50/107, H01M 50/636

(54) **FOLDED SHEET CASING OF A BATTERY**
GEFALTETES BLECHGEHÄUSE
BOÎTIER À FEUILLES PLIÉES

(43) Date of publication of application: 14.02.2024
(73) Proprietor: Northvolt AB, 112 47 Stockholm (SE)
(72) Inventor: Gastanares, Xabier, 722 20 Västerås (SE); Jang, Myungjae, 111 37 Stockholm (SE)
(74) Representative: Blidefalk, Jenny

(56) References cited:
- EP-A2- 1 246 275
- WO-A1-2005/124894
- WO-A1-2017/059419
- WO-A1-2017/106349
- WO-A1-2022/076283
- US-A1- 2019 097 204

## Description

### Technical field

The present disclosure generally relates to batteries for electric vehicles. More particularly, the present disclosure relates to casings for accommodating electrode jelly roll assemblies.

### Background

Rechargeable, also referred to as secondary, batteries find widespread use as electrical power supplies and energy storage systems. For example, in automobiles, battery packs formed of a plurality of battery modules, wherein each battery module includes a plurality of interconnected cells are provided as a means of effective storage and utilization of electric power.

Several different form factors exist for the cells applied in secondary batteries depending on their intended application field. In automotive applications, the most common cell types are cylindrical, prismatic and pouch cells. More particularly, there is a growing interest in efficiently packaging and securing prismatic cells within battery modules.

For example, cell casings, or cell housings, generally form part of a prismatic cell in secondary batteries, containing at least one electrode jelly roll assembly and protecting that at least one electrode jelly roll assembly from the environment surrounding the casing. Cell casings such as the one described above can for example be formed by deep drawing, or from an extruded material having a hollow cross section. WO 2017 059 419 discloses a battery housing of sheet formed into a rectangle having depth, the two opposing edges being welded together.

However, there is still a need for alternative and improved casing designs for containing electrode jelly roll assemblies, in particular in view of the protection provided by the casing to the electrode jelly roll assemblies and in view of the minimization of cost of manufacturing process.

### Summary

It is an object of the present disclosure to provide an alternative configuration of casings of prismatic cells, formed of several separate components, improving the protection provided to the at least one electrode jelly roll assembly contained therein. It is also an object of the present disclosure to provide an improved method of forming those casings which is more energy efficient and which minimizes material waste compared with casings formed from extruded materials. The invention is given in the claims.

Hence, according to a first aspect, there is provided a casing containing at least one electrode jelly roll assembly, wherein the casing comprises a folded sheet, defining a first open end portion and a second open end portion arranged on opposite sides of the casing. The folded sheet comprises a first sheet edge and a second sheet edge wherein the first sheet edge and the second sheet edge extend from the first open end portion to the second open end portion. The casing further comprises a joining plate arranged to join at least a part of the first sheet edge and the second sheet edge, such that the folded sheet and the joining plate form a closed profile of the casing. Moreover, the casing comprises an interlocking structure configured to secure the joining plate and the folded sheet.

According to a second aspect, there is provided a method for manufacturing a casing containing at least one electrode assembly. The method comprises folding a sheet such that a first open end portion and a second open end portion are formed on opposite sides of the folded sheet and such that a first sheet edge and a second sheet edge extend from the first open end portion to the second open end portion. The method further comprises joining at least a part of the first sheet edge and the second sheet edge by means of a joining plate, such that the folded sheet and the joining plate form a closed profile of the casing and securing the joining plate to the folded sheet by means of an interlocking structure.

The casing of the present disclosure is advantageous in that it provides protection of the electrode jelly roll assembly from the surroundings of the casing within the battery module. Furthermore, the casing provides protection for neighboring casings comprised in the battery module in the event of fault or failure, for example during a so-called 'thermal runaway' event, during which the electrode jelly roll assembly may swell and/or the internal chemical components (e.g. an electrolyte) of the electrode jelly roll assembly may produce gases, which may be heated as a result of exothermic processes.

The method for manufacturing the casing of the present disclosure is, as well, advantageous in that it enables casings of different dimensions to be manufactured while minimizing material waste. Furthermore, the use of a joining plate to form the casing of the present disclosure enables assembly work to be performed on the joining plate prior to its securing to the folded sheet resulting in less complex manufacturing process in contrast to casings formed from extruded materials. Furthermore, and in contrast to casings formed from an extruded material, the method for manufacturing the casing according to the present disclosure represents a cold manufacturing process. That is, the folded sheet, the joining plate and their joining together do not require heating of the material therefore reducing the energy required for manufacturing the casings, in turn reducing the cost of manufacturing of the casings. As such, the cold manufacturing process also reduces the risk of material degradation, i.e. the change in properties of the material forming the casing when subjected to increased temperatures. The cold manufacturing process of the present disclosure therefore yields a structurally strengthened product in that the material folded into the folded sheet and the material forming the joining plate conserve their properties throughout the manufacturing process, ensuring a product with greater material integrity.

It will be appreciated that the folded sheet provides the prismatic form (e.g. cuboidal) of the casing, elongating between the first open end portion and second open end portion it defines, i.e. elongating in a length direction of the folded sheet. The folded sheet may comprise four folds, extending between the open end portions, such that sections of the folded sheet adjacent to a fold are substantially perpendicular to one another. It will be appreciated that the radius of curvature of each fold of the folded sheet may be substantially similar. It will further be appreciated that the radius of curvature of each fold is dependent on the thickness of the sections of the folded sheet adjacent to each fold. For example, sections of the folded sheet having a thickness of 0.8 mm may be adjacent to a fold having a radius of curvature of 1 mm. It will be appreciated that the radius of curvature of each fold of the folded sheet is preferably as minimal as possible without subjecting the casing to a higher risk of cracking of the folds when in use.. The first open end portion and the second open end portion defined by the folded sheet may be configured to receive a first end plate and a second end plate comprising respective terminals for the electrode jelly roll assembly contained in the casing.

The first sheet edge and the second sheet edge of the folded sheet may be parallel edges of the sheet used to form the folded sheet. That is, following the folding of the sheet to form the folded sheet, the first sheet edge and the second sheet edge may be positioned in a same plane, opposite one another and extending between the two open end portions. The first sheet edge and second sheet edge may further be separated by a distance along at least part of the elongation of the folded sheet for receiving the joining plate.

The joining plate may join the first sheet edge and the second sheet edge of the folded sheet such that it bridges the distance separating the sheet edges between the open end portions. It will be appreciated that the joining plate may enable the joining of the complete length of the first sheet edge and second sheet edge in a length direction of the folded sheet, thus forming a closed profile of the casing. As used herein, "closed profile of the casing" may be understood as the casing having a cross-sectional outline which is continuous. Alternatively, the joining plate may enable the joining of part of the first sheet edge and part of the second sheet edge of the folding plate. In this case, the part of the length of the first sheet edge and the corresponding part of the length of the second sheet edge which are not joined by the joining plate along the length direction of the casing may be in contact with one another such that the closed profile of the casing is also formed.

As used herein, "joining" may be understood as the securing, or fix attachment, of the first and second sheet edges to the joining plate. That is, at least part of the first sheet edge and the second sheet edge may be structurally connected to one another via the joining plate.

This securing of the joining plate and at least part of the first and second sheet edges is ensured by the interlocking structure. As used herein, "interlocking structure" may be understood as mechanical structure composed interacting portions of the joining plate and at least part of the first and second sheet edges providing fix attachment of the joining plate and at least part of the first and second sheet edges.. Furthermore, the interlocking structure provides an additional securing of the joining plate and at least part of the first and second sheet edges to the welding of the joining plate and at least part of the first and second sheet edges which will be detailed later in the description.

In some embodiments, the interlocking structure may be a tongue and groove structure. As used herein, "tongue and groove" may be understood as a mechanical attachment formed by a protrusion, or tongue, fitting into/onto a corresponding channel, or groove to form a joint. The tongue and groove structure may be formed by the first sheet edge and a first plate edge, and by the second sheet edge and a second plate edge, the first plate edge and the second plate edge forming part of the joining plate and extending at least partly between the first open end portion to the second open end portion. For example, the first and second sheet edges may embody grooves and the first and second plate edges may embody tongues correspondingly fitted together to form the tongue and groove structure. As such, the tongue and groove structure enables the first and second plate edges to be supported by the first and second sheet edges thus increasing the strength of the joints securing the folded sheet and the joining plate.

In some embodiments, a length of the tongue of the tongue and groove structure exceeds a depth of the groove of the tongue and groove structure. This difference in dimensions ensures that a top surface of the tongue, i.e. the top surface of the first plate edge and the top surface of the second plate edge, is in contact with a corresponding bottom surface of the groove, i.e. the bottom surface of the groove of the first sheet edge and the bottom surface of the groove of the second sheet edge. This difference in dimensions therefore provides a contact between the top and bottom surfaces of the first and second plate edges and first and second sheet edges suitable for welding of the joints formed between the folded sheet and the joining plate by the tongue and groove structure. **It** will be appreciated the difference between the length of the tongue and the depth of the groove discussed herein further permits a greater range of tolerance when dimensioning the folded sheet and joining plate during manufacturing.

Alternatively to the tongue and groove structure, the interlocking structure, in some embodiments, may be formed by beveling the first sheet edge and the first plate edge, and by beveling the second sheet edge and the second plate edge. For example, the first sheet edge and the first plate edge may be beveled, or slanted, such that the beveled first plate edge of the joining plate may be securely fitted onto the correspondingly beveled first sheet edge and such that the beveled second plate edge of the joining plate may be securely fitted onto the correspondingly beveled second sheet edge. It will be appreciated that the present example of interlocking structure also enables the first and second plate edges to be supported by the first and second sheet edges in turn increasing the strength of the joints securing the folded sheet and the joining plate.

In some embodiments, the first sheet edge and the first plate edge, and the second sheet edge and the second plate edge are respectively joined together by means of a weld. It will be appreciated that the welding of the folded sheet and the joining plate may be performed on the joint formed between the folded sheet and the joining plate by the interlocking structure. Such welding, in combination with the interlocking structure, improves the structural strength of the casing by providing an additional securing of the joining plate and the folded sheet. It will further be appreciated that joining the joining plate together with the folded sheet by means of a weld provides a sealing effect to the enclosure formed by the casing and by the first and second end plates arranged at the first and second open ends of the casing. This sealing effect may in turn protect the electrode jelly roll assembly contained in the casing from the surroundings of the casing.

In some embodiments, the joining plate may further comprise a vent arranged between the first open end portion and the second open end portion of the casing. Such vent is configured to open, or rupture, in response to events of fault or failure of the cell comprising the casing, during which the electrode jelly roll assembly may swell and/or produce gases, such that gases or other ejecta may vented out of the casing.

In some embodiments, the vent may be integrally formed with the joining plate. That is, the vent may be formed into the material of the joining plate, for example by means of a stamping process. The vent may therefore be formed into the joining plate prior to, or after, its joining to the folded sheet during manufacturing. The vent being integrally formed with the joining plate is advantageous in that it reduces the number of components forming the casing, thus resulting in a less complex and less time-consuming manufacturing process.

Alternatively, the vent may be a component of the casing separate from the joining plate. To this end, in some embodiments the joining plate may comprise an aperture, arranged between the first open end portion and the second open end portion of the casing and the casing may comprise an engagement structure configured to secure a perimeter of the vent to a corresponding perimeter of the aperture of the joining plate. As used herein, "aperture" may be understood as an opening through the joining plate configured to receive the vent. As used herein, "perimeter" may be understood as an edge portion, or outer-most portion, of the vent and of the aperture of the joining plate, forming the outline of the vent and the outline of the aperture. The engagement structure may be characterized similarly as the interlocking structure, i.e. ensuring the securing of the perimeter of the vent and the perimeter of the aperture of the joining plate. For example, the engagement structure may be a tongue and groove structure or may be formed by beveling the perimeter of the vent and the perimeter of the aperture of the joining plate.

In some embodiments, the perimeter of the vent may be joined to the corresponding perimeter of the aperture of the joining plate by means of a weld. It will be appreciated that the welding of the perimeter of the vent together with the perimeter of the aperture may be performed on the joint formed between the perimeter of the vent and the perimeter of the aperture by the engagement structure, further securing the vent to the joining plate. It will further be appreciated such weld provides a sealing effect to the enclosure formed by the casing and by the first and second end plates arranged at the first and second open ends of the casing, allowing gases and ejecta to exit the casing only via the vent in the event of fault or failure. This sealing effect may in turn protect the electrode jelly roll assembly contained in the casing from the surroundings of the casing.

In some embodiments, the engagement structure may be configured to secure the perimeter of the vent to the corresponding perimeter of the aperture of the joining plate from within the casing. That is, the aperture of the joining plate may receive the vent on the surface of the joining plate facing the inside of the enclosure formed by the casing. Such configuration permits the vent to be supported by the joining plate, reducing the risk of rupture of the engagement structure and weld due to fatigue generated by the pressure differential between the inside of the casing in which the electrode jelly roll assembly is contained and the outside of the casing. It will be appreciated that the perimeter of the vent may be secured to the corresponding perimeter of the aperture of the joining plate prior to the securing to the joining plate and the folded sheet.

Alternatively, in some embodiments the engagement structure may be configured to secure the perimeter of the vent to the corresponding perimeter of the aperture of the joining plate from outside the casing. That is, the aperture of the joining plate may receive the vent on the surface of the joining plate facing away from the enclosure formed by the casing, i.e. the surface of the joining plate exposed to the surroundings of the casing. It will be appreciated that the perimeter of the vent may be secured to the corresponding perimeter of the aperture of the joining plate prior to, or after the securing to the joining plate and the folded sheet.

In some embodiments, the folded sheet may be formed of a material selected from the list consisting of: aluminum, steel. Similarly, the joining plate may be formed of a material selected from the list consisting of: aluminum, steel. Preferably, the material forming the folded sheet and the joining plate may be the same, providing higher strength to the welds securing the joining plate and the folded sheet. For example, the folded sheet and the joining plate may be formed of 3 series aluminum, such as Al 3003, or 1 series aluminum, such as Al1050. Furthermore, the folded sheet and the joining plate may be formed of the same material but with different parameters. For example, the folded sheet may be formed of 3 series aluminum (e.g. Al 3003) and the joining plate may be formed of 1 series aluminum (e.g. Al1050).

It will be appreciated that the casing of the present disclosure improves the protection of the electrode jelly roll assembly it contains, thereby reducing the need for additional components fulfilling a function of protection of the electrode jelly roll assembly.

Hence, according to a third aspect, there is provided a battery cell comprising at least one electrode jelly roll assembly and a casing, according to first aspect, containing the at least one electrode jelly roll assembly. The battery cell further comprises a first end plate and a second end plate, arranged in the first open end portion and the second open end portion of the casing, wherein the first end plate comprises a first terminal and the second end plate comprises a second terminal of the battery cell.

Further objectives of, features of, and advantages with the present disclosure will become apparent when studying the following detailed description, the drawings, and the appended claims. Those skilled in the art will realize that different features of the present disclosure can be combined to create embodiments other than those described in the following.

### Brief description of drawings

One or more embodiments will be described, by way of example only, and with reference to the following figures, in which:
Figure 1a schematically illustrates an exploded view of a casing according to embodiments of the present disclosure;
Figure 1b schematically illustrates a perspective view of an assembled casing according to embodiments of the present disclosure;
Figure 2a schematically illustrates a cross sectional view of a casing according to embodiments of the present disclosure;
Figure 2b schematically illustrates a cross sectional view of a casing according to embodiments of the present disclosure; and
Figure 3 schematically illustrates a cross sectional view of a casing according to embodiments of the present disclosure.

### Detailed description

The present disclosure is described in the following by way of a number of illustrative examples. It will be appreciated that these examples are provided for illustration and explanation only and are not intended to be limiting on the scope of the disclosure.

Furthermore, although the examples may be presented in the form of individual embodiments, it will be recognized that the present disclosure also covers combinations of the embodiments described herein.

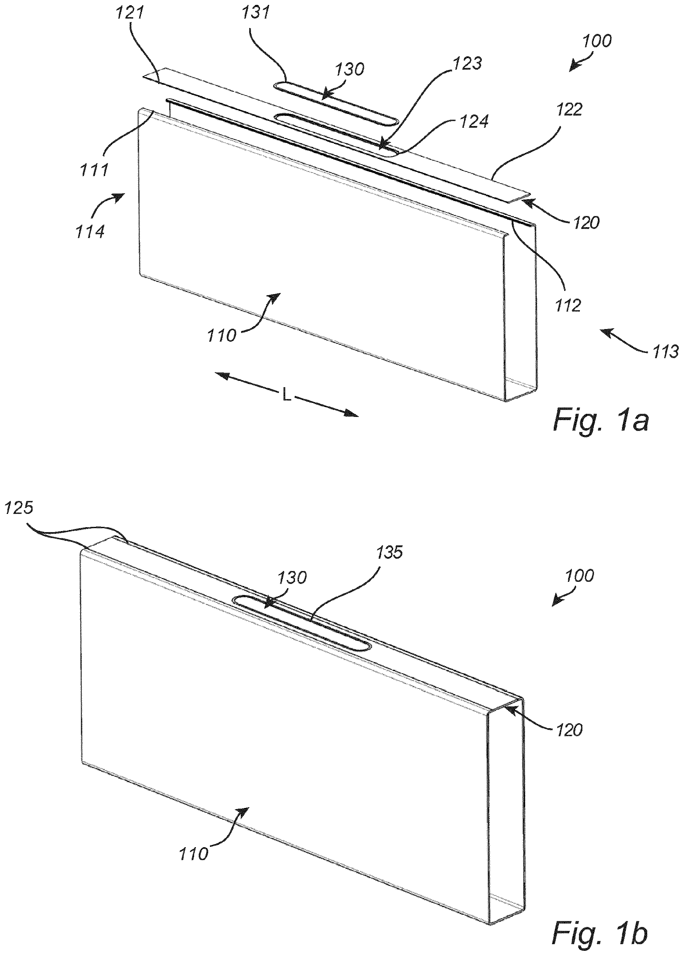

Figure 1a schematically illustrates an exploded view of a casing 100 according to embodiments of the present disclosure. The casing 100 is shown comprising a folded sheet 110, elongating between a first open end portion 113 and a second open end portion 114, i.e. in a length direction L of the casing 100. It will be appreciated that the folded sheet 110 provides a prismatic form to the casing 100. The folded sheet 110 is further shown comprising a first sheet edge 111 and a second sheet edge 112 also extending between the first open end portion 113 and the second open end portion 114 along the length direction L of the folded sheet 110. Figure 1a depicts the folded sheet 110 having four folds such that the first sheet edge 111 and the second sheet edge 112 are positioned in the same plane, opposite one another. The casing 100 is further shown comprising a joining plate 120 configured to join the first sheet edge 111 and the second sheet edge 112. The joining plate 120 comprises a first plate edge 121 and a second plate edge 122 extending between the first open end portion 113 and the second open end portion 114 along the length direction L of the casing 100. It will be appreciated that the first sheet edge 111 and the first plate edge 121, as well as the second sheet edge 112 and the second plate edge 122, may form an interlocking structure (not visible in Figure 1a) configured to secure the joining plate 120 to the folded sheet 110. Figure 1a further illustrates an aperture 123 arranged through the joining plate 120 and positioned between the first open end portion 113 and the second end portion 114. The aperture 123 is configured to receive a vent 130 such that an engagement structure (not visible in Figure 1a) is configured to secure a perimeter 131 of the vent 130 to a corresponding perimeter 124 of the aperture 123. It will be appreciated that for the embodiment illustrated in Figure 1a the vent 130 and the joining plate 120 are separate components forming part of the casing 100 and the aperture 123 is configured to receive the vent 130 on a surface of the joining plate 120 facing away from the enclosure of the casing 110. That is, the perimeter 131 of the vent 130 may be secured to the corresponding perimeter 124 of the aperture 123 of the joining plate 120 from outside the casing 100.

Figure 1b schematically illustrates a perspective view of the assembled casing 100 shown in Figure 1a. That is, the joining plate 130 and the folded sheet 110 are shown joined together to form a closed profile of the casing 100. Figure 1b further illustrates joints 125 formed by the interlocking structure (not visible in Figure 1b) securing the first sheet edge and the first plate edge, and the second sheet edge and the second plate edge. Similarly, joint 135 is shown formed by the securing of the perimeter of the vent 130 to the corresponding perimeter of the aperture of the joining plate 120 by the engagement structure (not visible in Figure 1b). It will be appreciated that the folded sheet 110 and the joining plate 130 may be further secured by applying a weld on the joints 125. Similarly, it will be appreciated that the vent 130 and the aperture of the joining plate 120 may be further secured by applying a weld on the joint 135.

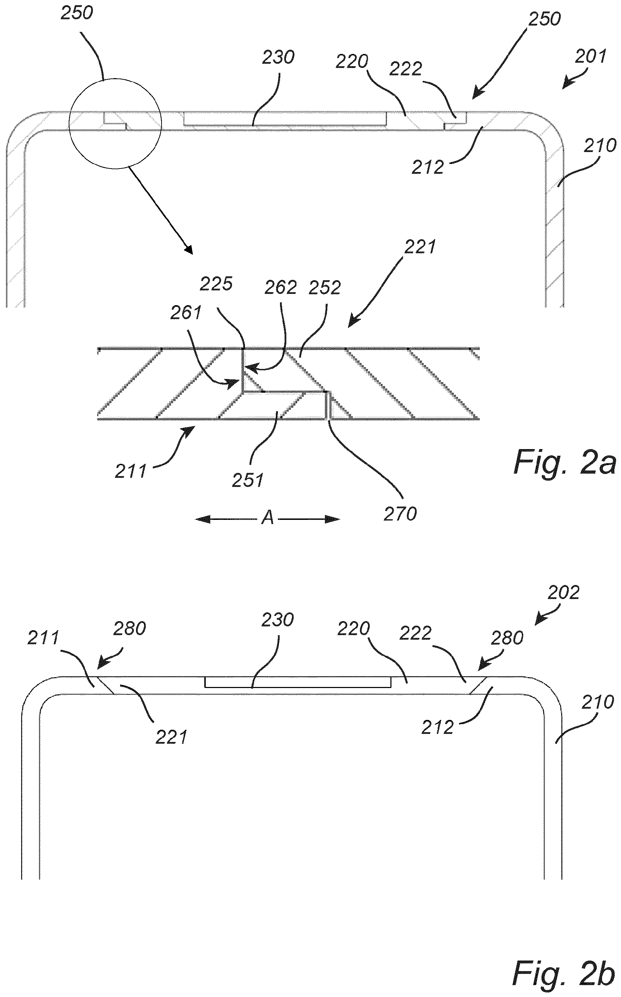

Figure 2a schematically illustrates a cross sectional view of a casing 201 according to embodiments of the present disclosure. It will be appreciated that Figure 2a illustrates part of the cross-section of the casing 201, more particularly the part of the cross-section of the casing 201 in which the joining plate 220 and vent 230 are visible. Figure 2a therefore illustrates a folding sheet 210 comprising a first sheet edge 211 and a second sheet edge 212 joined together via the joining plate 220. Figure 2a further depicts a vent 230 integrally formed with the joining plate 220. That is, the vent 230 is formed on the joining plate 220, for example by means of a stamping process. The casing 201 further comprises an interlocking structure 250 configured to secure the joining plate 220 and the folded sheet 210. The interlocking structure 250 is a tongue and groove structure formed by the first sheet edge 211 and a first plate edge 221, and by the second sheet edge 212 and a second plate edge 222, the first plate edge 221 and the second plate edge 222 forming part of the joining plate 220. For illustrative purposes, Figure 2a shows an enlarged view of the portion of interlocking structure 250 securing the first sheet edge 211 and the first plate edge 221. It will be appreciated that the following characterization of the interlocking structure 250 depicted in the enlargement shown in Figure 2a also applies to portion of the interlocking structure 250 securing of the second sheet edge 212 and the second plate edge 222. The enlarged portion of the interlocking structure 250 shows the first sheet edge 211 forming a groove 251. The groove 251 may have a step-like structure configured to receive the tongue 252 formed by the first plate edge 221. Figure 2a therefore illustrates the tongue 252 fitted into the groove 251 to form the interlocking structure 250. As such, the tongue and groove structure 250 enables the first plate edge 221 to be supported by the first sheet edge 211 thus increasing the strength of the securing of the folded sheet 210 and the joining plate 220. Moreover, the enlarged portion of the interlocking structure 250 shows the length of the tongue 252, along direction A, exceeding the depth of the groove 251 in the same direction. The difference between the length of the tongue 252 and the depth of the groove 251 ensures that the top surface 262 of the tongue 252 formed by the first plate edge 221 is in contact with the bottom surface 261 of the groove 251 formed by the first sheet edge 211. The contact between the top surface 262 and the bottom surface 261 further enables the interlocking structure 250 to form a joint 225 along the first sheet edge 211 and the fist plate edge 221. It will be appreciated that, in addition the interlocking structure 250, the folded sheet 210 and the joining plate 220 may be secured by applying a weld on the joint 225. Still further, Figure 2a illustrates a gap 270, or space 270, formed between the tongue 252 and the groove 251 as a result of the difference between the length of the tongue 252 and the depth of the groove 251.

Figure 2b schematically illustrates a cross sectional view of a casing 202 according to embodiments of the present disclosure. Similarly as illustrated in Figure 2a, Figure 2b shows the folding sheet 210 comprising a first sheet edge 211 and a second sheet edge 212 joined together via the joining plate 220. Figure 2b further depicts a vent 230 integrally formed with the joining plate 220. Furthermore, Figure 2b shows an alternative interlocking structure 280 to the tongue and groove interlocking structure 250 depicted in Figure 2a. The interlocking structure 280 is formed by beveling of the first sheet edge 211 and the first plate edge 221 and by the beveling of the second sheet edge 212 and the second plate edge 222.The first sheet edge 211 and the first plate edge 221 are therefore shown slanted wherein the beveled first plate edge 221 of the joining plate 220 is securely fitted onto the correspondingly beveled first sheet edge 211 and the beveled second plate edge 222 of the joining plate 220 is securely fitted onto the correspondingly beveled second sheet edge 212. As such, the interlocking structure 280 enables the first and second plate edges 2221, 222 to be supported by the first and second sheet edges 211, 212 thus increasing the strength the securing of the folded sheet 210 and the joining plate 220.

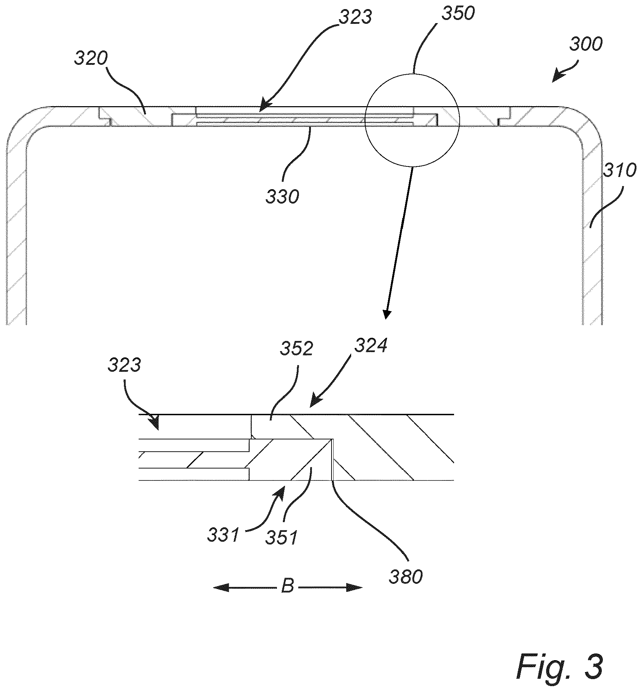

Figure 3 schematically illustrates a cross sectional view of a casing 300 according to embodiments of the present disclosure. **It** will be appreciated that Figure 3 illustrates part of the cross-section of the casing 300, more particularly the part of the cross-section of the casing 300 in which the joining plate 320 and vent 330 are visible. As illustrated, the joining plate 320 comprises an aperture 323, arranged through the joining plate 320, configured to receive the vent 330. **It** will be appreciated that for the embodiment illustrated in Figure 3 the vent 330 and the joining plate 320 are separate components forming part of the casing 300 and the aperture 323 is configured to receive the vent 330 on the surface of a joining plate 320 facing the inside of the enclosure of the casing 300. Figure 3 further illustrates the engagement structure 350 securing a perimeter 331 of the vent 330 to a corresponding perimeter 324 of the aperture 323. For illustrative purposes, Figure 3 shows an enlarged view of the portion of engagement structure 350 securing the vent 330 and the joining plate 320. **It** will be appreciated that the following characterization of the engagement structure 350 depicted in the enlargement shown in Figure 3 applies to the entire perimeter 331 of the vent 330 and to the entire corresponding perimeter 324 of the aperture 323. The enlarged portion of the engagement structure 350 is also shown forming a tongue and groove structure. That is, the perimeter 324 of the aperture 323 is shown forming a groove 352. The groove 352 may have a step-like structure configured to receive the tongue 351 formed by the perimeter 331 of the vent 330. Figure 3 therefore illustrates the tongue 351 fitted into the groove 352 to form the interlocking structure 350. As such, the tongue and groove structure 350 enables the vent 330 to be supported by the joining plate 320 thus reducing the risk of rupture of the engagement structure 350 due to the force exerted on the vent 330 by the pressure differential between the inside of the casing 300, in which the electrode jelly roll assembly is contained, and the outside of the casing 300. Moreover, the enlarged portion of the interlocking structure 350 shows the length of the tongue 351, along direction B, exceeding the depth of the groove 352 in the same direction. The difference between the length of the tongue 351 and the depth of the groove 352 ensures that the vent 330 may be properly received by/fitted into the aperture 323. Figure 3 further illustrates a gap 380, or space 380, formed between the tongue 351 and the groove 352 as a result of the difference between the length of the tongue 351 and the depth of the groove 352. It will be appreciated that, in addition the interlocking structure 350, the perimeter 324 of the aperture 323 of the joining plate 320 and the perimeter 331 of the vent 330 may be secured by applying a weld to bridge the gap 380.

It will be appreciated that, although the above aspects are presented separately, they may be combined in any suitable manner such that a casing may benefit from all of the advantages provided by respective aspects of the present disclosure.

Furthermore, whilst the forgoing description and the appended drawings are provided as exemplary or preferred realizations of the disclosed aspects, it will be appreciated that the disclosed aspects need not be limited to the exact form shown and/or described.

## Claims

1. A casing (100, 201, 202, 300) adapted to contain at least one electrode jelly roll assembly, the casing comprises:
a folded sheet (110, 210, 310), defining a first open end portion (113) and a second open end portion (114) arranged on opposite sides of the casing, wherein the folded sheet comprises a first sheet edge (111, 211) and a second sheet edge (112, 212), the first sheet edge and the second sheet edge extending from the first open end portion to the second open end portion;
a joining plate (120, 220, 320) arranged to join at least a part of the first sheet edge and the second sheet edge, such that the folded sheet and the joining plate form a closed profile of the casing; and
an interlocking structure (250) configured to secure the joining plate and the folded sheet.

2. The casing according to claim 1, wherein the interlocking structure is a tongue and groove structure formed by the first sheet edge and a first plate edge (121, 221), and by the second sheet edge and a second plate edge (122, 222), the first plate edge and the second plate edge forming part of the joining plate and extending at least partly between the first open end portion to the second open end portion.

3. The casing according to claim 2, wherein a length of a tongue of the tongue and groove structure exceeds a depth of a groove of the tongue and groove structure.

4. The casing according to claim 1, wherein the interlocking structure is formed by beveling the first sheet edge and the first plate edge, and the second sheet edge and the second plate edge.

5. The casing according to claim 1, wherein the joining plate further comprises a vent (130, 230, 330) arranged between the first open end portion and the second open end portion of the casing.

6. The casing according to claim 5, wherein the vent is integrally formed with the joining plate.

7. The casing according to claim 1, wherein the joining plate further comprises an aperture (123, 323), arranged between the first open end portion and the second open end portion of the casing.

8. The casing according to claim 7, further comprising an engagement structure (350) configured to secure a perimeter (131, 331) of the vent to a corresponding perimeter (124, 324) of the aperture of the joining plate.

9. The casing according to claim 8, wherein the engagement structure is configured to secure the perimeter of the vent to the corresponding perimeter of the aperture of the joining plate from within the casing.

10. The casing according to claim 8, wherein the engagement structure is configured to secure the perimeter of the vent to the corresponding perimeter of the aperture of the joining plate from outside the casing.

11. The casing according to claim 2 or 4, wherein the first sheet edge and the first plate edge, and the second sheet edge and the second plate edge are respectively joined together by means of a weld.

12. The casing according to claim 9 or 10, wherein the perimeter of the vent is joined to the corresponding perimeter of the aperture of the joining plate by means of a weld.

13. The casing according to any of the preceding claims, wherein the folded sheet and/or the joining plate is formed of a material selected from the list consisting of: aluminum, steel.

14. A method for manufacturing the casing (100, 201, 202, 300) according to claims 1-13, the method comprising the steps of:
folding a sheet such that a first open end portion (113) and a second open end portion (114) are formed on opposite sides of the folded sheet and such that a first sheet edge (111, 211) and a second sheet edge (112, 212) extend from the first open end portion to the second open end portion;
joining at least a part of the first sheet edge and the second sheet edge by means of a joining plate (120, 220, 320) such that the folded sheet and the joining plate form a closed profile of the casing; and
securing the joining plate to the folded sheet by means of an interlocking structure (250).

15. The method according to claim 14, wherein the step of joining at least a part of the first sheet edge and the second sheet edge by means of a joining plate further comprises welding at least part of the first sheet edge to a first plate edge and welding at least part of the second sheet edge to a second plate edge, the first plate edge and the second plate edge forming part of the joining plate and extending at least partly between the first open end portion to the second open end portion.

16. A battery cell, comprising:
at least one electrode jelly roll assembly; and
a casing (100, 201, 202, 300), according to claims 1-13, containing the at least one electrode jelly roll assembly and comprising a first end plate and a second end plate arranged in the first open end portion (113) and the second open end portion (114) of the casing;
wherein the first end plate comprises a first terminal and the second end plate comprises a second terminal of the battery cell.

## Patentansprüche

1. Ein Gehäuse (100, 201, 202, 300), das dazu geeignet ist, mindestens eine Elektrodengelrollenbaugruppe zu enthalten, wobei das Gehäuse umfasst:
ein gefaltetes Blech (110, 210, 310), das einen ersten offenen Endabschnitt (113) und einen zweiten offenen Endabschnitt (114) auf gegenüberliegenden Seiten des Gehäuses definiert, wobei das gefaltete Blech eine erste Blechkante (111, 211) und eine zweite Blechkante (112, 212) umfasst, die erste Blechkante und die zweite Blechkante sich vom ersten offenen Endabschnitt bis zum zweiten offenen Endabschnitt erstrecken;
eine Verbindungsplatte (120, 220, 320), die so angeordnet ist, dass sie mindestens einen Teil der ersten Blechkante und der zweiten Blechkante verbindet, sodass das gefaltete Blech und die Verbindungsplatte ein geschlossenes Profil des Gehäuses bilden; und
eine Verriegelungsstruktur (250), die dazu konfiguriert ist, die Verbindungsplatte und das gefaltete Blech zu sichern.

2. Das Gehäuse nach Anspruch 1, wobei die Verriegelungsstruktur eine Nut- und Federstruktur ist, die durch die erste Blechkante und eine erste Plattenkante (121, 221) sowie durch die zweite Blechkante und eine zweite Plattenkante (122, 222) gebildet wird, wobei die erste Plattenkante und die zweite Plattenkante Teil der Verbindungsplatte sind und sich mindestens teilweise zwischen dem ersten offenen Endabschnitt und dem zweiten offenen Endabschnitt erstrecken.

3. Das Gehäuse nach Anspruch 2, wobei die Länge einer Feder der Nut- und Federstruktur die Tiefe einer Nut der Nut- und Federstruktur übersteigt.

4. Das Gehäuse nach Anspruch 1, wobei die Verriegelungsstruktur durch Abschrägen der ersten Blechkante und der ersten Plattenkante sowie der zweiten Blechkante und der zweiten Plattenkante gebildet wird.

5. Das Gehäuse nach Anspruch 1, wobei die Verbindungsplatte weiterhin eine Entlüftung (130, 230, 330) umfasst, die zwischen dem ersten offenen Endabschnitt und dem zweiten offenen Endabschnitt des Gehäuses angeordnet ist.

6. Das Gehäuse nach Anspruch 5, wobei die Entlüftung integraler Bestandteil der Verbindungsplatte ist.

7. Das Gehäuse nach Anspruch 1, wobei die Verbindungsplatte weiterhin eine Öffnung (123, 323) umfasst, die zwischen dem ersten offenen Endabschnitt und dem zweiten offenen Endabschnitt des Gehäuses angeordnet ist.

8. Das Gehäuse nach Anspruch 7, weiterhin umfassend eine Verriegelungsstruktur (350), die dazu konfiguriert ist, einen Umfang (131, 331) der Entlüftung an einen entsprechenden Umfang (124, 324) der Öffnung der Verbindungsplatte zu sichern.

9. Das Gehäuse nach Anspruch 8, wobei die Verriegelungsstruktur dazu konfiguriert ist, den Umfang der Entlüftung an den entsprechenden Umfang der Öffnung der Verbindungsplatte von innerhalb des Gehäuses zu sichern.

10. Das Gehäuse nach Anspruch 8, wobei die Verriegelungsstruktur dazu konfiguriert ist, den Umfang der Entlüftung an den entsprechenden Umfang der Öffnung der Verbindungsplatte von außerhalb des Gehäuses zu sichern.

11. Das Gehäuse nach Anspruch 2 oder 4, wobei die erste Blechkante und die erste Plattenkante sowie die zweite Blechkante und die zweite Plattenkante jeweils durch Schweißen miteinander verbunden sind.

12. Das Gehäuse nach Anspruch 9 oder 10, wobei der Umfang der Entlüftung durch Schweißen an den entsprechenden Umfang der Öffnung der Verbindungsplatte verbunden ist.

13. Das Gehäuse nach einem der vorhergehenden Ansprüche, wobei das gefaltete Blech und/oder die Verbindungsplatte aus einem Material besteht, das aus der Liste ausgewählt ist, die umfasst: Aluminium, Stahl.

14. Ein Verfahren zur Herstellung des Gehäuses (100, 201, 202, 300) nach den Ansprüchen 1-13, wobei das Verfahren die folgenden Schritte umfasst:
Falten eines Blechs, sodass ein erster offener Endabschnitt (113) und ein zweiter offener Endabschnitt (114) auf gegenüberliegenden Seiten des gefalteten Blechs gebildet werden und sodass eine erste Blechkante (111, 211) und eine zweite Blechkante (112, 212) sich vom ersten offenen Endabschnitt bis zum zweiten offenen Endabschnitt erstrecken;
Verbinden mindestens eines Teils der ersten Blechkante und der zweiten Blechkante mittels einer Verbindungsplatte (120, 220, 320), sodass das gefaltete Blech und die Verbindungsplatte ein geschlossenes Profil des Gehäuses bilden; und
Sichern der Verbindungsplatte am gefalteten Blech mittels einer Verriegelungsstruktur (250).

15. Das Verfahren nach Anspruch 14, wobei der Schritt des Verbindens mindestens eines Teils der ersten Blechkante und der zweiten Blechkante mittels einer Verbindungsplatte weiterhin das Schweißen mindestens eines Teils der ersten Blechkante an eine erste Plattenkante und das Schweißen mindestens eines Teils der zweiten Blechkante an eine zweite Plattenkante umfasst, wobei die erste Plattenkante und die zweite Plattenkante Teil der Verbindungsplatte sind und sich mindestens teilweise zwischen dem ersten offenen Endabschnitt und dem zweiten offenen Endabschnitt erstrecken.

16. Eine Batteriezelle, umfassend:
mindestens eine Elektrodengelrollenbaugruppe; und
ein Gehäuse (100, 201, 202, 300) nach den Ansprüchen 1-13, das die mindestens eine Elektrodengelrollenbaugruppe enthält und eine erste Endplatte und eine zweite Endplatte umfasst, die im ersten offenen Endabschnitt (113) und im zweiten offenen Endabschnitt (114) des Gehäuses angeordnet sind;
wobei die erste Endplatte einen ersten Anschluss und die zweite Endplatte einen zweiten Anschluss der Batteriezelle umfasst.

## Revendications

1. Un boîtier (100, 201, 202, 300) adapté à contenir au moins un ensemble de rouleaux de gel d'électrode, le boîtier comprend:
une feuille pliée (110, 210, 310), définissant une première partie d'extrémité ouverte (113) et une deuxième partie d'extrémité ouverte (114) disposées sur les côtés opposés du boîtier, la feuille pliée comprenant un premier bord de feuille (111, 211) et un deuxième bord de feuille (112, 212), le premier bord de feuille et le deuxième bord de feuille s'étendant de la première partie d'extrémité ouverte à la deuxième partie d'extrémité ouverte;
une plaque de jonction (120, 220, 320) disposée pour joindre au moins une partie du premier bord de feuille et du deuxième bord de feuille, de sorte que la feuille pliée et la plaque de jonction forment un profil fermé du boîtier; et
une structure de verrouillage (250) configurée pour sécuriser la plaque de jonction et la feuille pliée.

2. Le boîtier selon la revendication 1, dans lequel la structure de verrouillage est une structure à languette et rainure formée par le premier bord de feuille et un premier bord de plaque (121, 221), et par le deuxième bord de feuille et un deuxième bord de plaque (122, 222), le premier bord de plaque et le deuxième bord de plaque faisant partie de la plaque de jonction et s'étendant au moins partiellement entre la première partie d'extrémité ouverte et la deuxième partie d'extrémité ouverte.

3. Le boîtier selon la revendication 2, dans lequel la longueur d'une languette de la structure à languette et rainure dépasse la profondeur d'une rainure de la structure à languette et rainure.

4. Le boîtier selon la revendication 1, dans lequel la structure de verrouillage est formée par le biseautage du premier bord de feuille et du premier bord de plaque, et du deuxième bord de feuille et du deuxième bord de plaque.

5. Le boîtier selon la revendication 1, dans lequel la plaque de jonction comprend en outre une ventilation (130, 230, 330) disposée entre la première partie d'extrémité ouverte et la deuxième partie d'extrémité ouverte du boîtier.

6. Le boîtier selon la revendication 5, dans lequel la ventilation est formée intégralement avec la plaque de jonction.

7. Le boîtier selon la revendication 1, dans lequel la plaque de jonction comprend en outre une ouverture (123, 323), disposée entre la première partie d'extrémité ouverte et la deuxième partie d'extrémité ouverte du boîtier.

8. Le boîtier selon la revendication 7, comprenant en outre une structure d'engagement (350) configurée pour sécuriser un périmètre (131, 331) de la ventilation à un périmètre correspondant (124, 324) de l'ouverture de la plaque de jonction.

9. Le boîtier selon la revendication 8, dans lequel la structure d'engagement est configurée pour sécuriser le périmètre de la ventilation au périmètre correspondant de l'ouverture de la plaque de jonction de l'intérieur du boîtier.

10. Le boîtier selon la revendication 8, dans lequel la structure d'engagement est configurée pour sécuriser le périmètre de la ventilation au périmètre correspondant de l'ouverture de la plaque de jonction de l'extérieur du boîtier.

11. Le boîtier selon la revendication 2 ou 4, dans lequel le premier bord de feuille et le premier bord de plaque, et le deuxième bord de feuille et le deuxième bord de plaque sont respectivement joints ensemble par soudure.

12. Le boîtier selon la revendication 9 ou 10, dans lequel le périmètre de la ventilation est joint au périmètre correspondant de l'ouverture de la plaque de jonction par soudure.

13. Le boîtier selon l'une quelconque des revendications précédentes, dans lequel la feuille pliée et/ou la plaque de jonction est formée d'un matériau sélectionné dans la liste comprenant: aluminium, acier.

14. Un procédé de fabrication du boîtier (100, 201, 202, 300) selon les revendications 1-13, le procédé comprenant les étapes suivantes:
plier une feuille de sorte qu'une première partie d'extrémité ouverte (113) et une deuxième partie d'extrémité ouverte (114) soient formées sur les côtés opposés de la feuille pliée et de sorte qu'un premier bord de feuille (111, 211) et un deuxième bord de feuille (112, 212) s'étendent de la première partie d'extrémité ouverte à la deuxième partie d'extrémité ouverte;
joindre au moins une partie du premier bord de feuille et du deuxième bord de feuille au moyen d'une plaque de jonction (120, 220, 320) de sorte que la feuille pliée et la plaque de jonction forment un profil fermé du boîtier; et
sécuriser la plaque de jonction à la feuille pliée au moyen d'une structure de verrouillage (250).

15. Le procédé selon la revendication 14, dans lequel l'étape de jonction d'au moins une partie du premier bord de feuille et du deuxième bord de feuille au moyen d'une plaque de jonction comprend en outre la soudure d'au moins une partie du premier bord de feuille à un premier bord de plaque et la soudure d'au moins une partie du deuxième bord de feuille à un deuxième bord de plaque, le premier bord de plaque et le deuxième bord de plaque faisant partie de la plaque de jonction et s'étendant au moins partiellement entre la première partie d'extrémité ouverte et la deuxième partie d'extrémité ouverte.

16. Une cellule de batterie, comprenant:
au moins un ensemble de rouleaux de gel d'électrode; et
un boîtier (100, 201, 202, 300) selon les revendications 1-13, contenant le ou les ensembles de rouleaux de gel d'électrode et comprenant une première plaque d'extrémité et une deuxième plaque d'extrémité disposées dans la première partie d'extrémité ouverte (113) et la deuxième partie d'extrémité ouverte (114) du boîtier;
la première plaque d'extrémité comprenant une première borne et la deuxième plaque d'extrémité comprenant une deuxième borne de la cellule de batterie.
